# EUROPEAN PATENT APPLICATION

(11) **EP 4 231 649 A1**
(43) Date of publication of application: **23.08.2023**
(21) Application number: 23154674.8
(22) Date of filing: 02.02.2023
(51) Int. Cl.: H04N 21/234, G06F 3/01, G06F 3/04815, H04N 5/45, H04N 13/366, H04N 21/2365

(54) **APPARATUS AND METHOD FOR DISPLAYING A COMPOSITE VIDEO BY A HEAD-MOUNTED DISPLAY**

(30) Priority: 22.02.2022 GB 202202359
(71) Applicant: Sony Interactive Entertainment Inc., Tokyo 108-0075 (JP)
(72) Inventor: WALKER, Andrew, London W1F 7LP (GB)
(74) Representative: D Young & Co LLP

(57) **Abstract**

Data processing apparatus comprises a video generator to generate video images for display to a user by a head mountable display, HMD; in which the video generator is responsive to a set of two or more video sources to generate a composite video representation of the set of two or more video sources for display; and a controller to control operation of the video generator; in which the controller is configured to control the video generator to selectively vary a contribution of each of the set of two or more video sources to the composite video representation.

## Description

This disclosure relates to apparatus and methods.

When images are displayed to a user wearing a head mountable display (HMD), some arrangements can provide a composite representation of video material from multiple video sources. This can have the benefit of providing a user with significant amounts of material to provide interest and/or information.

It is in this context that the present disclosure arises.

Various aspects and features of the present disclosure are defined in the appended claims and within the text of the accompanying description.

Embodiments of the disclosure will now be described, by way of example only, with reference to the accompanying drawings, in which:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6a schematically illustrates a plan view of an HMD;
Figure 6b schematically illustrates a near-eye tracking arrangement;
Figure 7 is a schematic flowchart illustrating a method;
Figure 8 schematically illustrates a gaze tracking environment;
Figure 9 schematically illustrates a gaze tracking system;
Figure 10 schematically illustrates an apparatus; and
Figures 11 to 15 schematically illustrate respective composite image representations.

### Example Embodiments

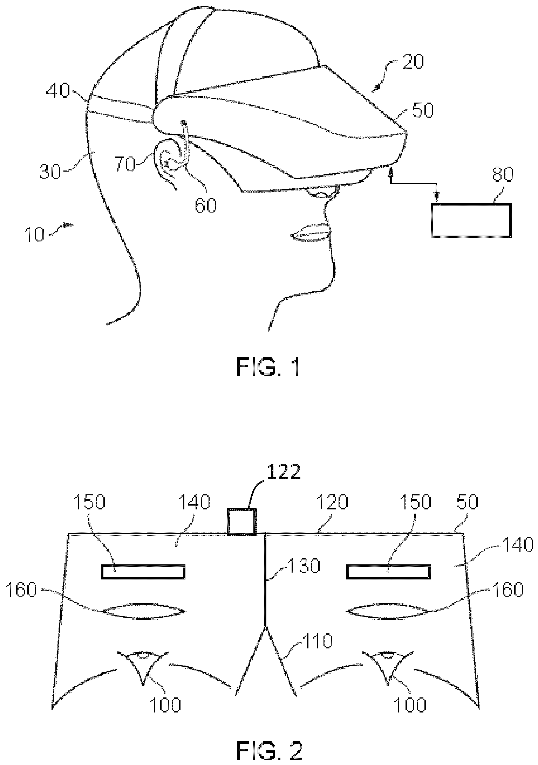

Referring now to the drawings, wherein like reference numerals designate identical or corresponding parts throughout the several views, embodiments of the present disclosure are described. In Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some other embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 (Figure 2) may capture images to the front of the HMD, in use. Such images may be used for head tracking purposes, in some embodiments, while it may also be suitable for capturing images for an augmented reality (AR) style experience.

In operation, a video signal is provided for display by the HMD. Although specific examples will be discussed below, in general terms this could be provided by an external video signal source 80 such as a video games machine or data processing apparatus (such as a personal computer), in which case the signals could be transmitted to the HMD by a wired or a wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply (including one or more batteries and/or being connectable to a mains power outlet) may be linked by a cable to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the disclosure are applicable to an HMD having at least one electrical and/or optical cable linking the HMD to another device, such as a power supply and/or a video (and/or audio) signal source. So, embodiments of the disclosure can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

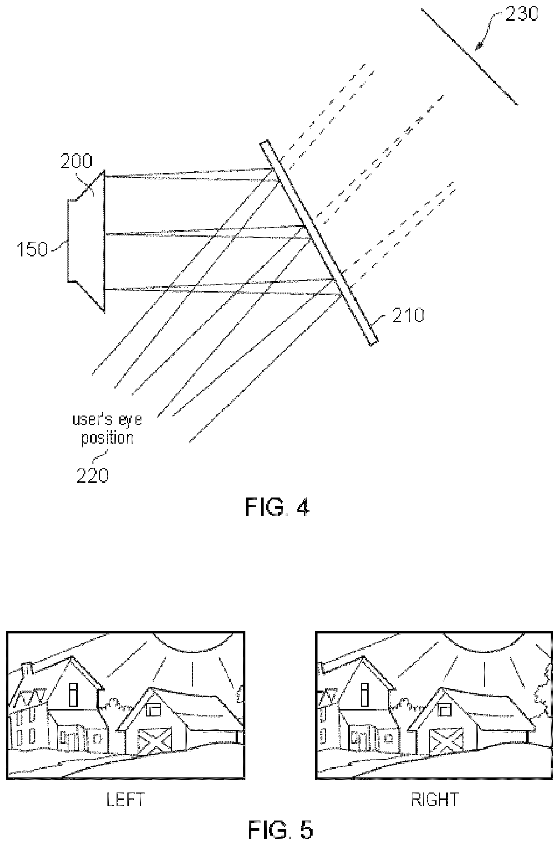

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

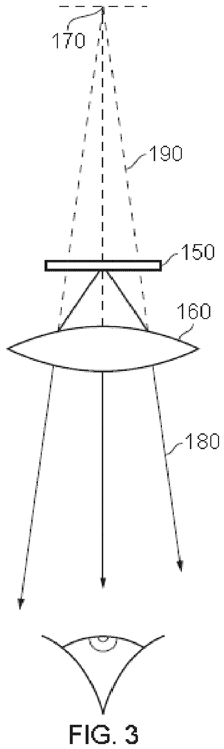

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

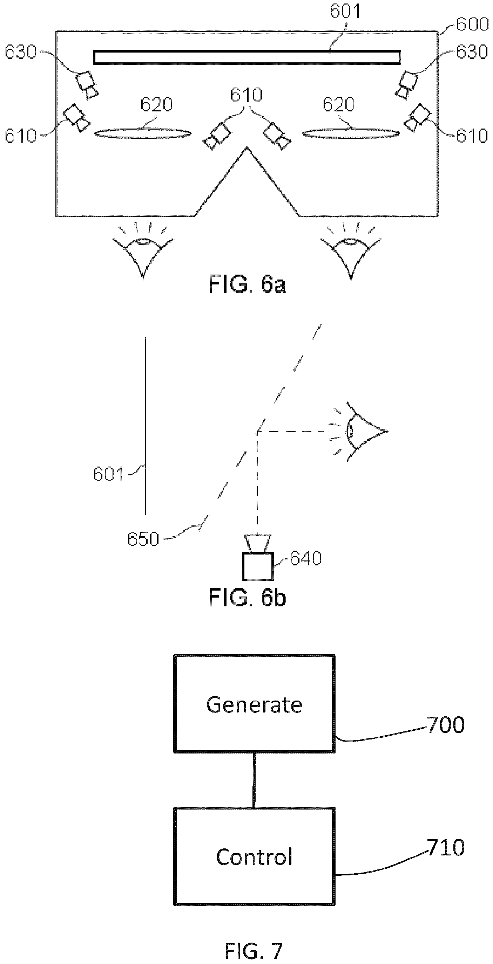

Turning to gaze tracking in such an arrangement, Figures 6a and 6b schematically illustrates two possible arrangements for performing eye tracking on an HMD. The cameras provided within such arrangements may be selected freely so as to be able to perform an effective eye-tracking method. In some existing arrangements, visible light cameras are used to capture images of a user's eyes. Alternatively, infra-red (IR) cameras are used so as to reduce interference either in the captured signals or with the user's vision should a corresponding light source be provided, or to improve performance in low-light conditions.

Figure 6a shows an example of a gaze tracking arrangement in which the cameras are arranged within an HMD so as to capture images of the user's eyes from a short distance. This may be referred to as near-eye tracking, or head-mounted tracking.

In this example, an HMD 600 (with a display element 601) is provided with cameras 610 that are each arranged so as to directly capture one or more images of a respective one of the user's eyes using an optical path that does not include the lens 620. This may be advantageous in that distortion in the captured image due to the optical effect of the lens is able to be avoided. Four cameras 610 are shown here as examples of possible positions at which eye-tracking cameras may be provided, although it should be considered that any number of cameras may be provided in any suitable location so as to be able to image the corresponding eye effectively. For example, only one camera may be provided per eye or more than two cameras may be provided for each eye.

However it is considered that in a number of embodiments it is advantageous that the cameras are instead arranged so as to include the lens 620 in the optical path used to capture images of the eye. Examples of such positions are shown by the cameras 630. While this may result in processing being required to enable suitably accurate tracking to be performed, due to the deformation in the captured image due to the lens, this may be performed relatively simply due to the fixed relative positions of the corresponding cameras and lenses. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Such an arrangement may be particularly suited to use with IR or otherwise non-visible light sources, as will be apparent from the below description.

Figure 6b includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the camera 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted.

Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Whether an arrangement of the type shown in Figures 6a or 6b is used, a requirement is that the processing system (discussed below) can distinguish and/or evaluate a gaze direction from the captured images. This can be performed by analysis of captured images of the cornea and/or retina and/or by other techniques of the type discussed in:
https://en.wikipedia.org/wiki/Eye_tracking#Optical_tracking and/or
https://en.wikipedia.org/wiki/Video-oculography
both of which are incorporated into this description by reference in their entirety.

As just one example, not to exclude other examples, the direction of gaze of an eye can be detected by detecting the location of the centre of the captured image of the pupil within the captured image of the cornea (whose outline is itself defined by a boundary with the sclera in the captured images). For example, a pupil centre which is central within a circular image of the cornea indicates a gaze straight ahead. Deviations of the captured pupil image in a particular direction from the central position indicate a gaze towards that direction.

Despite technical challenges including those discussed above, such tracking methods may be considered beneficial in that they allow a greater range of interactions for a user - rather than being limited to HMD viewing, gaze tracking may be performed for a viewer of a television, for instance.

Rather than varying only in the location in which cameras are provided, eye-tracking arrangements may also differ in where the processing of the captured image data to determine tracking data is performed.

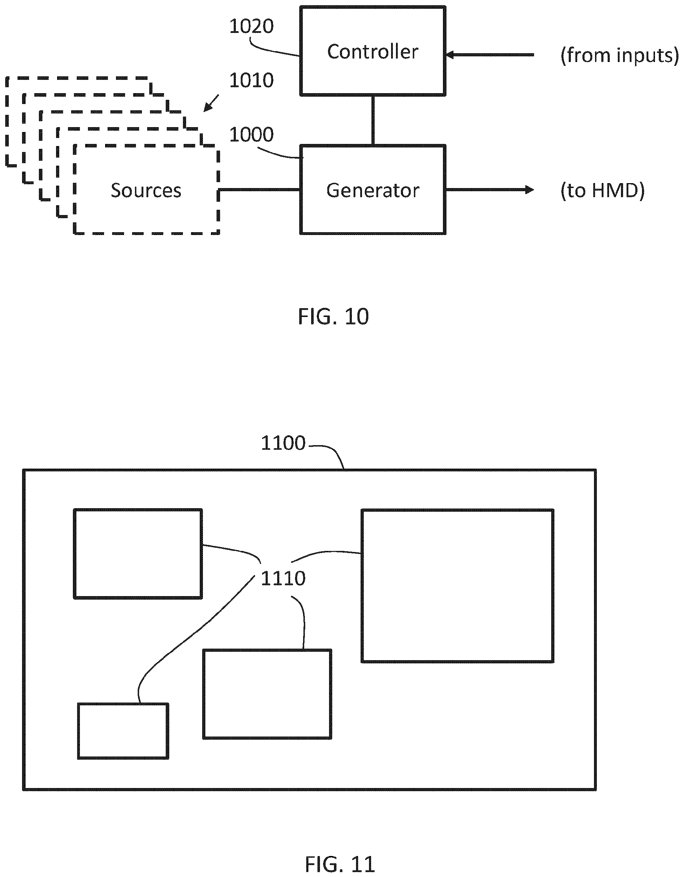

By way of summary of the techniques to be described below, Figure 7 is a schematic flowchart illustrating a method comprising:
generating (at a step 700) video images for display to a user by a head mountable display, HMD, the video images for display providing a composite video representation (such as that shown in Figure 11 to be described below) of a set of two or more video sources; and
controlling (at a step 710) operation of the generating step to selectively vary a contribution of each of the set of two or more video sources to the composite video representation.

Note that the method may be implemented by circuitry and/or by computer software which, when executed by a computer such as a processing device 910 to be described below, causes the computer to perform the method of Figure 7. Such computer software may be stored by storage 913 as an example of a non-transitory machine-readable storage medium which stores the computer software.

Although the presentation of multiple video sources as a composite video representation can provide a lot of interest and/or information simultaneously, it is at least potentially possible for a user to be overwhelmed or at least partially overloaded by the amount of information on the display. This can lead to a reduction in the user's attention to any individual video source and/or to user discomfort. It is an aim of embodiments of the present disclosure to at least partially alleviate such issues.

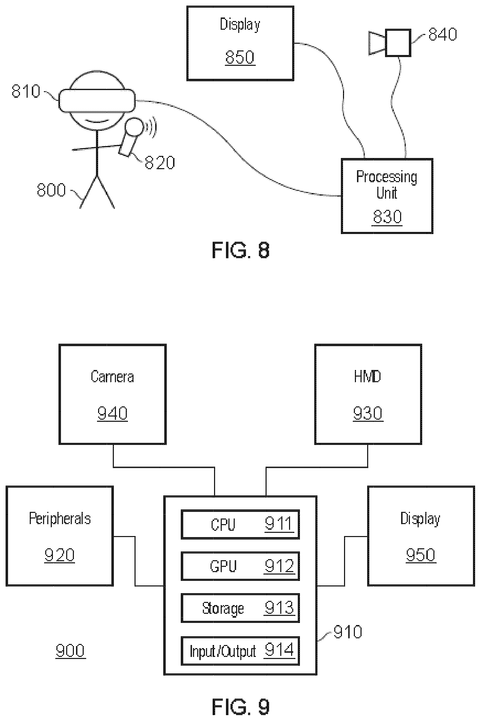

Figure 8 schematically illustrates an environment in which various processes may be performed. In this example, the user 800 is using an HMD 810 that is associated with a processing unit 830, such as a games console, with the peripheral 820 as an example of a user control (which may be wired or - as shown schematically here - wirelessly connected to the processing unit 830) allowing a user 800 to input commands to control the processing. The HMD 810 may perform eye tracking in line with an arrangement exemplified by Figure 6a or 6b, for example - that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 8 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 8 it is also considered that the processing may in some embodiments be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as the processing unit 830) for processing. In the former case, the HMD 810 may output the results of the processing to an external device for use in an image generation process if such processing is not performed exclusively at the HMD 810. In embodiments in which the HMD 810 is not present, captured images from the camera 840 are output to the processing unit 830 for processing.

Figure 9 schematically illustrates a system for performing one or more eye tracking processes, for example in an embodiment such as that discussed above with reference to Figure 8. The system 900 comprises a processing device 910, one or more peripherals 920, an HMD 930, a camera 940, and a display 950. Of course, not all elements need be present within the system 900 in a number of embodiments - for instance, if the HMD 930 is present then it is considered that the camera 940 may be omitted as it is unlikely to be able to capture images of the user's eyes.

As shown in Figure 9, the processing device 910 may comprise one or more of a central processing unit (CPU) 911, a graphics processing unit (GPU) 912, storage (for example a non-transitory machine-readable storage medium such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

The GPU 912 may be configured to generate content for display to the user on which the eye tracking is being performed. Of course, such content generation processes may be performed elsewhere - for example, an HMD 930 may have an on-board GPU that is operable to generate content in dependence upon the eye tracking data.

The storage 913 may be provided so as to store any suitable information. Examples of such information include program data, content generation data, and eye tracking model data. In some cases, such information may be stored remotely such as on a server, and as such a local storage 913 may not be required - the discussion of the storage 913 should therefore be considered to refer to local (and in some cases removable storage media) or remote storage.

The input/output 914 may be configured to perform any suitable communication as appropriate for the processing device 910. Examples of such communication include the transmission of content to the HMD 930 and/or display 950, the reception of eye-tracking data and/or images from the HMD 930 and/or the camera 940, and communication with one or more remote servers (for example, via the internet).

As discussed above, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may comprise a number of sub-elements, which have been omitted from Figure 9 for the sake of clarity. Of course, the HMD 930 should comprise a display unit operable to display images to a user. In addition to this, the HMD 930 may comprise any number of suitable cameras for eye tracking (as discussed above), in addition to one or more processing units that are operable to generate content for display and/or generate eye tracking data from the captured images.

The camera 940 and display 950 may be configured in accordance with the discussion of the corresponding elements above with respect to Figure 8.

Example arrangements using the techniques of Figure 7 will now be described. Figure 10 schematically illustrates data processing apparatus comprising:
a video generator 1000 (for example implemented by video generation circuitry) to generate video images for display to a user by a head mountable display, HMD;
in which the video generator is responsive to a set of two or more video sources 1010 to generate a composite video representation of the set of two or more video sources for display; and
a controller 1020 (for example implemented as control circuitry) to control operation of the video generator;
in which the controller is configured to control the video generator to selectively vary a contribution of each of the set of two or more video sources to the composite video representation.

Note that in Figure 10, neither the sources 1010 nor the HMD need to be provided as part of the apparatus as described. In examples, with reference to Figure 9, the sources 1010 may be provided by the peripherals 920, the camera 940 and/or various processes executed by the CPU 911 and/or the GPU 912, for example using video material stored by the storage 913, and/or by one or more external video sources not shown in Figure 9. The video generator 1000 may be executed by the apparatus 910 for example. In alternative arrangements, the video generator may be implemented, at least in part, by processing provided at the HMD 810. In other examples, the apparatus comprises the set of two or more video sources and/or the HMD.

Note that as discussed above, in some examples the HMD may be a virtual reality HMD configured to obscure an ambient scene from the user. In other examples, the HMD may be an augmented reality HMD configured to present a representation of an ambient scene to the user (either by at least partial transparency of a front-facing portion (when worn) to allow the user wearing the HMD to view the ambient scene through that portion or by the use of a front-facing (when worn) camera to capture images of the ambient scene.

The video generator operates with respect to video images provided by the sources 1010 to generate video images for display by the HMD in the form of a composite or collage video representation of the set of two or more video sources. An example 1100 of such a composite representation is provided by Figure 11 in which, within the composite video representation 1100, various respective regions 1110 are provided to display video material from each of a set of (in this example) four video sources. The placement of the regions 1110 and their respective sizes are under the control of the video generator 1000.

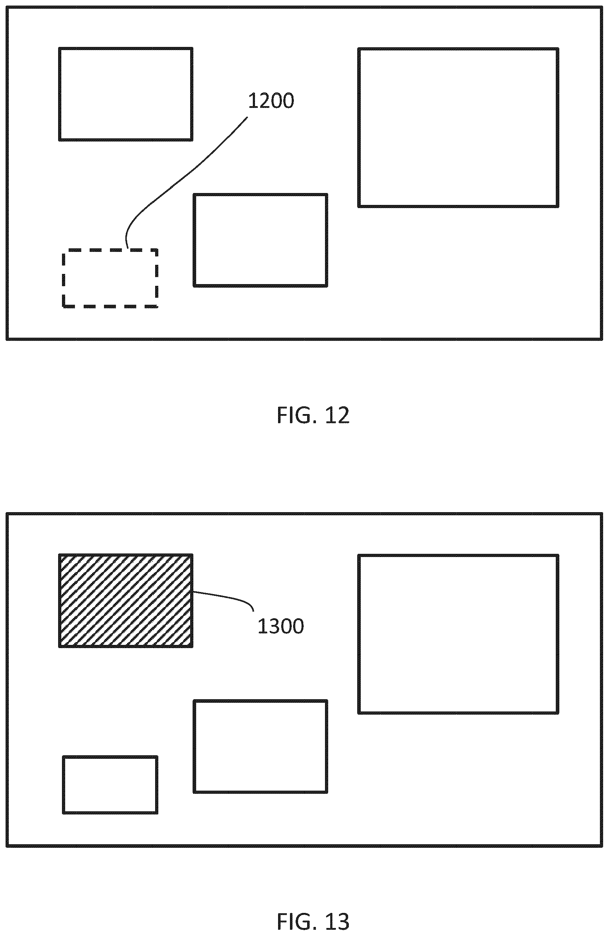

As mentioned above, the controller is configured to control the video generator to selectively vary a contribution of each of the set of two or more video sources to the composite video representation. Various example ways in which this variation can be achieved will be described further below with reference to Figures 12-15, but first a description will be provided of potential influences on the operation of the controller.

In some examples, the controller is configured to detect a number of the video sources (for example by communicating control signals with the video generator 1000) and to selectively vary the contribution of each of the set of two or more video sources to the composite video representation in response to the detected number. In some examples, the user may be considered to be capable of simultaneously comprehending or viewing no more than a threshold number of simultaneous video presentations within the composite representation 1100. This threshold number may be predetermined (for example, three) or may be derived by analysis of the user's behaviour (for example, by detecting that the user operates controls to shut down more than a particular number of video sources being simultaneously presented) or may be derived from user profile data, for example stored by the storage 913 and associated with the prevailing user of the HMD. In each of these techniques, however, the controller is configured to selectively vary the contribution of each of the set of two or more video sources to the composite video representation so as to limit a number of video sources contributing video material to the composite representation to a no more than a threshold number.

In other examples, the controller may be responsive to an indication or detection, for example provided by a control signal from the video generator 1000, of a total display area or at least respective display areas of the various representations of the video sources contributing to the composite representation 1100 and to selectively vary the contribution of each of the set of two or more video sources to the composite video representation in response to the detected respective display areas. For example, the controller may be configured to selectively vary the contribution of each of the set of two or more video sources to the composite video representation so as to limit a total display area of those video sources contributing video material to the composite representation to a no more than a threshold display area. Again, the threshold display area may be predetermined, may be derived from an analysis of user behaviour and/or may be associated with a user profile.

The thresholds discussed above may be considered as representations or proxies for limits on the user's ability to pay attention to the video presentation. Another possible detection which may also (or instead) contribute to a decision on the user's attention limit is as follows. In some examples, the apparatus comprises one or more user controls, the controller being responsive to user operation of the one or more user controls as an indication of detected user attention, and to selectively vary the contribution of each of the set of two or more video sources to the composite video representation in response to the detected user attention.

Similarly, as well or instead, the apparatus may comprise one or more sensors (such as the in-HMD camera or cameras discussed above with reference to Figures 6a and 6b) configured to detect a user viewing direction while wearing the HMD, the controller being responsive to the detected user viewing direction to selectively vary the contribution of each of the set of two or more video sources to the composite video representation. In some examples, in a situation in which the controller 1020 has arrived at a control decision to reduce the prominence of one or more representations of respective video sources in the composite representation 1100, the detection of the user viewing direction can be used by the controller 1020 to determine which of the video source representations should be reduced in prominence.

In further examples (as well or instead), the controller is responsive to user profile data indicative of user interests and to subject data associated with at least some of the set of two or more video sources, to selectively vary the contribution of the video sources in dependence upon a comparison of the user profile data and the subject data. Here, the controller may determine a video source to be reduced in prominence in response to a relative lack of overlap between the data indicative of user interests and the subject data.

Of course, it is not a requirement that the variation performed under the control of the controller 1020 involves only reducing a video source in prominence. Within a general approach by the controller to vary the composite representation 1100, one or more video sources could be reduced in prominence and one or more other video sources could be increased in prominence and/or reverted to a previously existing level of prominence.

Other examples are relevant to an augmented reality HMD of the type discussed above in which a camera such as a front-facing camera (such as the camera 122 in Figure 2) is provided to capture images of the ambient scene, whether or not those images or a transparent portion are used to provide the augmented reality (see-through or partial see-through) function. Here, the controller 1020 may be responsive to an aspect of captured images of the ambient scene. For example, the aspect may be indicative of image motion within the ambient scene, in which case the controller 1020 may be configured to reduce the prominence of one or more display representations either selected according to a priority order or those which spatially overlap regions within the user's view at which ambient scene motion is detected. In another example, the aspect may relate to object or facial recognition so that if a given object or a given person is detected in the ambient scene one or more display representations are reduced in prominence as discussed above.

Various techniques may be used to vary the presentation of a video source within the composite representation. Examples will be discussed with reference to Figures 12-15.

In a first example, with reference to Figure 12, a particular video source representation (for example the representation 1200) is simply removed from the composite representation. This provides an example of the controller 1020 selectively inhibiting the use of video material from one or more of the video sources in the generation of the composite representation.

In another example, shown schematically in Figure 13, a particular video source representation (for example the representation 1300) is no longer presented as a video presentation but instead as a still image. The still image could be, for example, a thumbnail image associated with the video source, a generic thumbnail image, a most-recently-displayed (or other recently displayed) video frame or the like. This provides an example of the controller 1020 selectively replacing video material from one or more of the video sources by a respective still image.

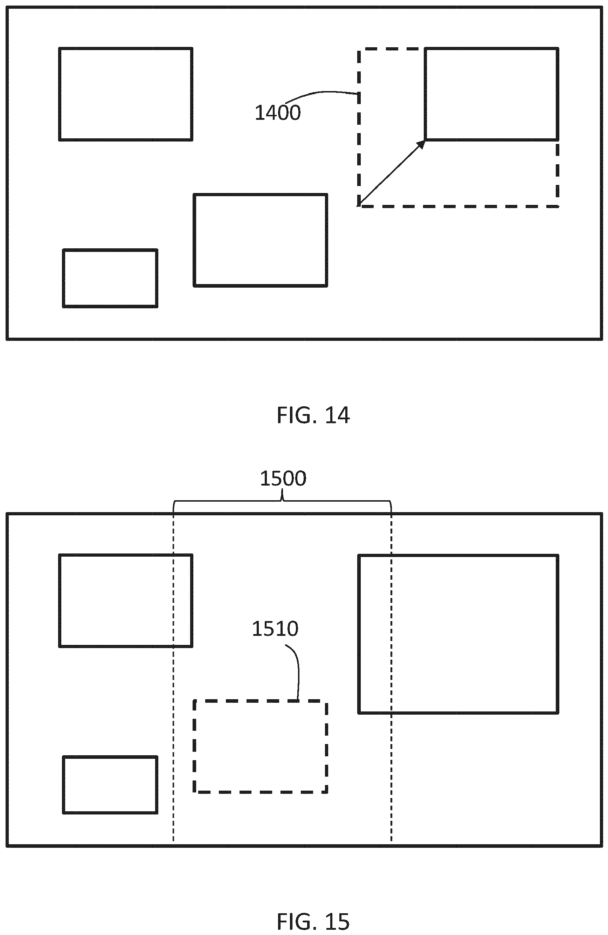

In other examples, for example as shown in Figure 14, the controller 1020 can control the video generated to vary (for example, reduce) the display size of a given video source representation such as the representation 1400 which is reduced in size in the schematic diagram of Figure 14.

Finally, with reference to Figure 15, an example is provided in which ambient scene image motion is detected within a region 1500 relative to the user's viewpoint in an augmented reality HMD, so that the controller 1020 takes action to reduce the prominence (for example, inhibit the display of) the representation 1510 lying within the region 1500.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Similarly, a data signal comprising coded data generated according to the methods discussed above (whether or not embodied on a non-transitory machine-readable medium) is also considered to represent an embodiment of the present disclosure.

It will be apparent that numerous modifications and variations of the present disclosure are possible in light of the above teachings. It is therefore to be understood that within the scope of the appended clauses, the technology may be practised otherwise than as specifically described herein.

Other example arrangements are set out in the following clauses:

### CLAUSES

Clause 1. Data processing apparatus comprising:
   a video generator to generate video images for display to a user by a head mountable display, HMD;
   in which the video generator is responsive to a set of two or more video sources to generate a composite video representation of the set of two or more video sources for display; and
   a controller to control operation of the video generator;
   in which the controller is configured to control the video generator to selectively vary a contribution of each of the set of two or more video sources to the composite video representation.
Clause 2. The apparatus of clause 1, in which the controller is configured to selectively vary the contribution of each of the set of two or more video sources to the composite video representation by selectively replacing video material from one or more of the video sources by a respective still image.
Clause 3. The apparatus of clause 1, in which the controller is configured to selectively vary the contribution of each of the set of two or more video sources to the composite video representation by selectively inhibiting the use of video material from one or more of the video sources in the generation of the composite representation.
Clause 4. The apparatus of any one of clauses 1 to 3, in which the controller is configured to detect a number of the video sources and to selectively vary the contribution of each of the set of two or more video sources to the composite video representation in response to the detected number.
Clause 5. The apparatus of clause 4, in which the controller is configured to selectively vary the contribution of each of the set of two or more video sources to the composite video representation so as to limit a number of video sources contributing video material to the composite representation to a no more than a threshold number.
Clause 6. The apparatus of any one of the preceding clauses, in which the controller is configured to detect a respective display area of the composite representation associated with each of the video sources and to selectively vary the contribution of each of the set of two or more video sources to the composite video representation in response to the detected respective display areas.
Clause 7. The apparatus of clause 6, in which the controller is configured to selectively vary the contribution of each of the set of two or more video sources to the composite video representation so as to limit a total display area of those video sources contributing video material to the composite representation to a no more than a threshold display area.
Clause 8. The apparatus of any one of the preceding clauses, comprising one or more user controls, the controller being responsive to user operation of the one or more user controls as an indication of detected user attention, and to selectively vary the contribution of each of the set of two or more video sources to the composite video representation in response to the detected user attention.
Clause 9. The apparatus of any one of the preceding clauses, comprising one or more sensors configured to detect a user viewing direction while wearing the HMD, the controller being responsive to the detected user viewing direction to selectively vary the contribution of each of the set of two or more video sources to the composite video representation.
Clause 10. The apparatus of any one of the preceding clauses, in which the controller is responsive to user profile data indicative of user interests and to subject data associated with at least some of the set of two or more video sources, to selectively vary the contribution of the video sources in dependence upon a comparison of the user profile data and the subject data.
Clause 11. The apparatus of any one of the preceding clauses, comprising the set of two or more video sources.
Clause 12. The apparatus of any one of the preceding clauses, comprising the HMD.
Clause 13. The apparatus of clause 12, in which the HMD is a virtual reality HMD configured to obscure an ambient scene from the user.
Clause 14. The apparatus of clause 12, in which the HMD is an augmented reality HMD configured to present a representation of an ambient scene to the user.
Clause 15. The apparatus of clause 13 or clause 14, in which the HMD comprises a front-facing camera to capture images of the ambient scene.
Clause 16. The apparatus of clause 15, in which the controller is responsive to an aspect of the captured images of the ambient scene.
Clause 17. The apparatus of clause 14, in which the HMD comprises a substantially transparent front-facing portion to allow viewing, by a user wearing the HMD, of the ambient scene through the substantially transparent front-facing portion.
Clause 18. A method comprising:
   generating video images for display to a user by a head mountable display, HMD, the video images for display providing a composite video representation of a set of two or more video sources; and
   controlling operation of the generating step to selectively vary a contribution of each of the set of two or more video sources to the composite video representation.
Clause 19. Computer software which, when executed by a computer, causes the computer to perform the method of clause 18.
Clause 20. A non-transitory machine-readable storage medium which stores the computer software of clause 19.

## Claims

1. Data processing apparatus comprising:
a video generator to generate video images for display to a user by a head mountable display, HMD;
in which the video generator is responsive to a set of two or more video sources to generate a composite video representation of the set of two or more video sources for display; and
a controller to control operation of the video generator;
in which the controller is configured to control the video generator to selectively vary a contribution of each of the set of two or more video sources to the composite video representation.

2. The apparatus of claim 1, in which the controller is configured to selectively vary the contribution of each of the set of two or more video sources to the composite video representation by selectively replacing video material from one or more of the video sources by a respective still image.

3. The apparatus of claim 1, in which the controller is configured to selectively vary the contribution of each of the set of two or more video sources to the composite video representation by selectively inhibiting the use of video material from one or more of the video sources in the generation of the composite representation.

4. The apparatus of any one of claims 1 to 3, in which the controller is configured to detect a number of the video sources and to selectively vary the contribution of each of the set of two or more video sources to the composite video representation in response to the detected number.

5. The apparatus of claim 4, in which the controller is configured to selectively vary the contribution of each of the set of two or more video sources to the composite video representation so as to limit a number of video sources contributing video material to the composite representation to a no more than a threshold number.

6. The apparatus of any one of the preceding claims, in which the controller is configured to detect a respective display area of the composite representation associated with each of the video sources and to selectively vary the contribution of each of the set of two or more video sources to the composite video representation in response to the detected respective display areas.

7. The apparatus of claim 6, in which the controller is configured to selectively vary the contribution of each of the set of two or more video sources to the composite video representation so as to limit a total display area of those video sources contributing video material to the composite representation to a no more than a threshold display area.

8. The apparatus of any one of the preceding claims, comprising one or more user controls, the controller being responsive to user operation of the one or more user controls as an indication of detected user attention, and to selectively vary the contribution of each of the set of two or more video sources to the composite video representation in response to the detected user attention.

9. The apparatus of any one of the preceding claims, comprising one or more sensors configured to detect a user viewing direction while wearing the HMD, the controller being responsive to the detected user viewing direction to selectively vary the contribution of each of the set of two or more video sources to the composite video representation.

10. The apparatus of any one of the preceding claims, in which the controller is responsive to user profile data indicative of user interests and to subject data associated with at least some of the set of two or more video sources, to selectively vary the contribution of the video sources in dependence upon a comparison of the user profile data and the subject data.

11. The apparatus of any one of the preceding claims, comprising the HMD, in which the HMD is a virtual reality HMD configured to obscure an ambient scene from the user or the HMD is an augmented reality HMD configured to present a representation of an ambient scene to the user.

12. The apparatus of claim 11, in which the HMD comprises a front-facing camera to capture images of the ambient scene, and in which the controller is responsive to an aspect of the captured images of the ambient scene.

13. The apparatus of claim 11, in which the HMD comprises a substantially transparent front-facing portion to allow viewing, by a user wearing the HMD, of the ambient scene through the substantially transparent front-facing portion.

14. A method comprising:
generating video images for display to a user by a head mountable display, HMD, the video images for display providing a composite video representation of a set of two or more video sources; and
controlling operation of the generating step to selectively vary a contribution of each of the set of two or more video sources to the composite video representation.

15. Computer software which, when executed by a computer, causes the computer to perform the method of claim 14.
